# EUROPEAN PATENT APPLICATION

(11) **EP 4 488 733 A1**
(43) Date of publication of application: **08.01.2025**
(21) Application number: 23306134.0
(22) Date of filing: 05.07.2023
(51) Int. Cl.: G02B 6/44, H01B 9/00

(54) **METHOD FOR MANUFACTURING A COMPOSITE ELECTRIC POWER CABLE**

(71) Applicant: Nexans, 92400 Courbevoie (FR)
(72) Inventor: MARTHINSEN, Martin Andreas, 1746 SKJEBERG (NO); CLARKE, Cicilie, 1726 SARPSBORG (NO); EYSSAUTIER, Quentin, 1734 HAFLSUNDOY (NO)
(74) Representative: Ipsilon

(57) **Abstract**

The present invention relates to a method (30) for manufacturing a composite electric power cable (20), the method (30) comprising the steps of:
- assembling (32) inner layers (21) of the composite electric power cable (20), wherein the inner layers (21) comprises at least one electric conductor (29),
- adding (34) a data transmission layer (24) comprising a plurality of polypropylene bolts (22) and at least one fiber optic element (23), by winding the plurality of polypropylene bolts (22) helically around the inner layers (21) and winding the at least one fiber optic element (23) between at least two of the polypropylene bolts (22). The present invention also relates to a composite electric power cable (20) manufactured according to the method.

## Description

### FIELD OF THE INVENTION

The present invention relates to a method for manufacturing a composite electric power cable, and a method for repairing a composite electric power cable, notably manufactured by said method. The present invention also relates to a composite electric power cable.

### BACKGROUND OF THE INVENTION

Submarine HVDC (High Voltage Direct Current) cables are widely used to transport electric current at high voltage over large distances. Such cables are often, but not always three-core or three-phase cables, comprising three individual cores/conductors. Modern three-core cables (e.g. for the connection of offshore wind turbines) often carry optical fibers for data transmission or temperature measurement, in addition to the electrical conductors.

Such cables are exposed to many factors both during and after production, such as during spooling from the armoring process to the turntable, load-out from turntable in the factory to turntable on a vessel, during installation and after installation.

A particular challenge is that optical fiber has low mechanical strength in general, making several of the processes described above critical. Moreover, local bending or so-called microbend can cause the transmission characteristic of an optical fiber to be deteriorated significantly.

In some cases where an optical fiber is limited in length due to the bobbin of a rolling device or the like, several lengths of optical fiber must be joined to provide the desired length/match the length of the power cable it is combined with. Such joints can be weak points and prone to damages, and/or the joints are spacious, thus increasing the diameter of the cable either at the joint locations or the overall cable diameter.

Further, if damage occurs in the optical fiber, repair processes are complicated and expensive.

To alleviate these problems, the optical fiber is often provided as FIMT (fiber in metallic tube) between a lead layer and plastic sheath. The FIMT is applied longitudinally on the lead sheath layer in the cable after its extrusion on the power cable. Then a plastic sheath, such as PE (polyethylene) sheath, is extruded onto the FIMT, recovering and protecting both the lead layer and the FIMT.

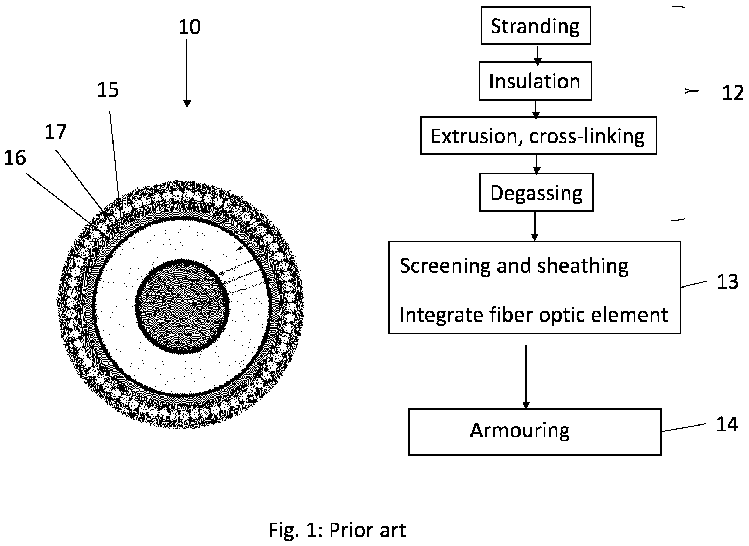

Figure 1 illustrates a prior art method for manufacturing an optical fiber composite electric power cable 10.

The cable 10 has a number of different inner layers which are provided in a first step 12, for example by conductor stranding, providing insulation system, extrusion and cross linking, and degassing. In a next step 13 of screening and sheathing, one or several fiber optic elements 15 are integrated in the cable. In the example of figure 1, there is one fiber optic element 15, which is an element known as fiber in metallic tube, FIMT. During manufacturing, the fiber optic element 15 can for example be laid out on a bedding tape 16 that extends longitudinal along the length of the cable on the outer surface of a lead sheath 17. The fiber optic element 15 is normally laid out in a wave pattern to compensate for lengthening during bending of the cable 10.

Over the lead sheath 17, and over the fiber optic element 15, there is provided an armoring layer in step 14. There may be provided further layers over the fiber optic elements and the inner layers of the power cable, such as outer serving polypropylene (PP) yarn or other outer protection layer.

This solution has some drawbacks, for example that the minimum allowable bending radius of the cable is very high and need large turntables for both production and installation. The largest challenge is during installation as few installation vessels have large enough turntable for this design. Another challenge is when the cable is not handled correctly during the installation due to stringent requirements induced by the FIMT placement in the cable design.

There is thus a need for a more robust way of including fiber optic elements in cables, as well as an improved repair method in case the optical fiber is damaged after production.

A first object of the invention is a method for manufacturing a composite electric power cable.

A second object of the invention is a method for repairing a composite electric power cable, notably manufactured by the method according to the first object of the invention.

A third object of the invention is a composite electric cable.

### SUMMARY OF THE INVENTION

The present invention relates to a method for manufacturing a composite electric power cable, the method comprising the steps of:
- assembling inner layers of the composite electric power cable , wherein the inner layers comprise at least one electric conductor, and
- adding a data transmission layer comprising a plurality of polypropylene bolts and at least one fiber optic element, by winding the plurality of polypropylene bolts helically around the inner layers and winding the at least one fiber optic element between at least two of the polypropylene bolts.

By the term "composite electric power cable", it should be understood a power cable that comprises both electric and data conductors, in this invention there is at least one electric conductor for conducting power and at least one fiber optic element that can transmit data.

The winding of the plurality of polypropylene bolts helically around the inner layers, and the winding of the at least one fiber optic element between at least two of the polypropylene bolts may be done simultaneously. This can be done by substituting one of the polypropylene bolts with the at least one fiber optic element during the winding.

The winding of the at least one fiber optic element between at least two of the polypropylene bolts, has the effect of at least one polypropylene bolt in a the data transmission layer being replaced/substituted by the fiber optic element in the resulting layer.

The method may further comprise a step of adding an armoring layer over the data transmission layer. This will protect the composite electric power cable, particularly during installation of the cable. The armoring layer can be added the same way as adding the data transmission layer, ie. by winding armoring wires around the data transmission layer. The armoring wires may be any suitable kind of wire, for example steel wire with an outer diameter suitable for the purpose of the composite electric power cable.

The at least one fiber optic element may be arranged within a tube, notably a metallic tube. The step of adding the data transmission layer may be performed by winding the tube helically around the inner layers between at least two of the polypropylene bolts.

The fiber optic element arranged within a tube may be for example a FIMT (Fiber in metallic Tube), which is a construction that has optical fibers encased by a thin walled metal tube that is typically made out of stainless steel but can be of other highly corrosion resistant metals. Other kinds of tubes may also be used, for example the tube material may be a composite or other suitable material with sufficient resistance towards impacts and with suitable bending stiffness.

The thickness/outer diameter of the cross section of the tube may be different according to different demands on the cable. For example, the outer diameter of the tube for the fiber optic element may be equal to or smaller than the outer diameter of the polypropylene bolts. As the tube(s) with fiber optic element(s) is (are) arranged in the same layer as the polypropylene bolts, it is advantageous that they do not project further out than the polypropylene bolts, as this will expose the fiber optic element to impacts and possible damage. When the outer diameter of the tube for the fiber optic element is the same as the outer diameter of the polypropylene bolts, any impacts on the power cable will be distributed similarly over the polypropylene bolts and the tube with fiber optic element. However, if the outer diameter of the tube is smaller than the outer diameter of the polypropylene bolts, the polypropylene bolts will take more of the load from the impact, thus shielding the fiber optic element from damage.

By "outer diameter", it should be understood the outer diameter of the cross section of the element of interest, for example power cable or any wire or tube that is part of the power cable.

The tube may for example have an outer diameter of 40% to 120% of the outer diameter of the polypropylene bolts, or the tube may have an outer diameter of ca. 50% to ca. 100% of the outer diameter of the polypropylene bolts.

The composite electric power cable may be a submarine high voltage direct current power cable.

The present invention also relates to a method for repairing a composite electric power cable, notably manufactured by the method described above.

The method for repairing a composite electric power cable comprises the steps of:
- identifying a location of a break or failure in the fiber optic element;
- removing sections of polypropylene bolts on both sides of the identified location, thereby providing a repair region;
- making a first cut of the fiber optic element on a first side of the identified location;
- making a second cut of the fiber optic element on a second side of the identified location;
- removing a section of the fiber optic element between the first and second cut;
- providing a replacement section of optical fiber having a length at least equal to the removed section of fiber optic element;
- splicing a first end of the replacement section to the first cut of the fiber optic element, forming a first spliced region;
- splicing a second end of the replacement section to the second cut of the fiber optic element, forming a second spliced region;
- winding the fiber optic element with replacement section around the inner layers.

The removal of sections of polypropylene bolts on both sides of the identified location, may be performed around the whole circumference of the composite electric power cable, or only a part of the circumference.

The length of the sections of polypropylene bolts that are removed as well as length of the segment of the circumference where the polypropylene bolts are removed can vary depending on the diameter of the composite electric power cable, how tight the fiber optic element was wound, the size of the location of the break or failure, etc.

The method may also comprise the step of adding an armoring layer over the data transmission layer as described above.

The step of providing a replacement section of optical fiber may comprise providing a replacement section that is longer than the removed section. This will form an overlength of optical fiber, and to take care of the overlength to ensure that the fiber optic element is not unduly exposed to damage due to the overlength, the length of the replacement length of fiber optic element is wound around the inner layers.

The method may also comprise performing the following step:
- adding a protection device to the spliced region of fiber optic element, such as tape, heat shrink sleeve, nylon straps, etc.

The composite electric power cable may be a submarine high voltage direct current power cable.

The present invention also relates to a composite electric power cable comprising:
- inner layers comprising at least one electric conductor,
- a data transmission layer comprising a plurality of polypropylene bolts and at least one fiber optic element, wherein the polypropylene bolts are wound helically around the inner layers, and the at least one fiber optic element is wound helically around the inner layers between at least two of the polypropylene bolts.

As described above, having the at least one fiber optic element wound between at least two of the polypropylene bolts, gives a data transmission layer where in effect at least one of the polypropylene bolts is substituted by the at least one fiber optic element.

The at least one fiber optic element may be arranged within a tube, and the tube may be wound helically around the inner layers.

The tube may be a metallic tube, such as stainless steel or other steel alloy.

The tube may have an outer diameter of 40% to 120% of the outer diameter of the polypropylene bolts, more specifically the tube may have an outer diameter of ca. 50% to ca. 100% of the outer diameter of the polypropylene bolts.

The composite electric power cable may comprise an armoring layer arranged over the data transmission layer.

The composite electric power cable may be a submarine high voltage direct current power cable.

### LIST OF DRAWINGS

Figure 1 illustrates a prior art method for manufacturing a composite electric power cable.
Figure 2 shows a cross section of a composite electric power cable with a fiber optic element in the data transmission layer according to the present invention.
Figure 3 illustrates schematically a method for manufacturing a composite electric power cable according to the present invention.
Figure 4 illustrates schematically a composite electric power cable according to the present invention, with a data transmission layer with at least one fiber optic element wound helically around inners layers of the composite electric power cable.
Figure 5 illustrates schematically a method for repairing a composite electric power cable according to the present invention, in particular for repairing a fiber optic element in a composite electric power cable according to the present invention.
Figure 6a-6d illustrates stages of a composite electric power cable during repair of a fiber optic element.

### DETAILED DESCRIPTION

The invention will now be described in more detail by using examples of embodiments and with reference to the above drawings.

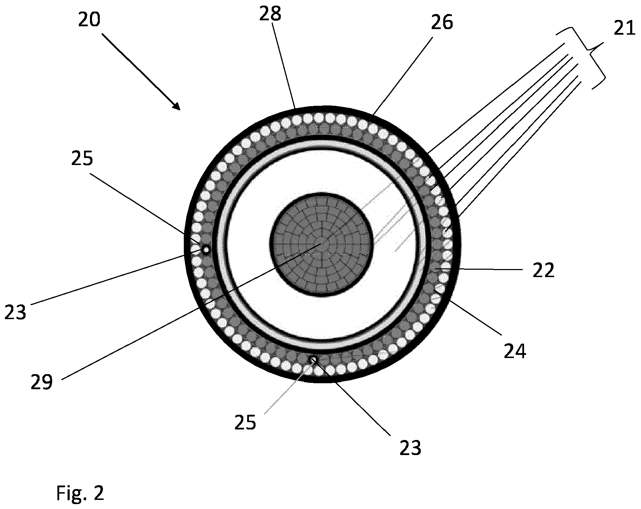

It is now referred to Figure 2, which shows a cross section of an example of a composite electric power cable according to the present invention.

The composite electric power cable 20 comprises several inner layers 21 necessary for the specific cable use, such as at least one electric conductor 29, screens and insulation layers. Outside the inner layers 21, a data transmission layer 24 is arranged. The data transmission layer 24 comprises polypropylene bolts 22 and at least one fiber optic element 23 arranged in a helical arrangement around the inner layers 21. The data transmission layer 24 has been formed by winding a plurality of polypropylene bolts 22 helically around the inner layers 21 and winding at least one fiber optic element 23 between at least two of the polypropylene bolts. This corresponds to at least one polypropylene bolt being replaced/substituted by a fiber optic element 23 in the final layer. In figure 2, there are illustrated two fiber optic elements 23, where each fiber optic element 23 is arranged between two polypropylene bolts, but there may be only one, or there may be more, according to the specific need for any particular power cable.

An outer protecting layer 28 is added to the outside of the data transmission layer to seal the composite electric power cable 20 and to add further protections against impacts. The outer protecting layer may for example be a polypropylene (PP) yarn or other outer protection layer that holds all components of the cable together and provides additional protection from external stresses.

In this embodiment the fiber optic element 23 is arranged within a tube 25. In other embodiments, however, the fiber optic element 23 may be arranged without a tube. The tube 25 is often a metallic tube, such as stainless steel, or other metal alloy, but the material may also be a composite or other suitable material with sufficient resistance towards impacts and with suitable bending stiffness.

The tube 25 with the fiber optic element 23 is thus wound helically around the inner layers 21 of the composite electric power cable 20 between the polypropylene bolts.

The tube 25 can have different characteristics, for example the thickness/outer diameter of the cross section of the tube may be different according to the demands on the cable. For example, may the outer diameter of the tube 25 be equal to or smaller than the polypropylene bolts. In the example of figure 2, the outer diameter of the tube 25 is substantially the same as the outer diameter of the polypropylene bolts 22.

An added benefit of smaller outer diameter of the tube 25 compared to the outer diameter of the polypropylene bolts 22, is that a longer length of fiber optic element in tube can be spooled onto a bobbin without increasing the size of the bobbin. This simplifies production of the composite electric power cable 20.

A disadvantage with smaller outer diameter of the tube 25 compared to the outer diameter of the polypropylene bolts 22, is that the tube and thus the fiber optic element 23 can experience squeezing between adjacent polypropylene bolts 22, which unduly can impact the fiber optic element 23 within the tube 25.

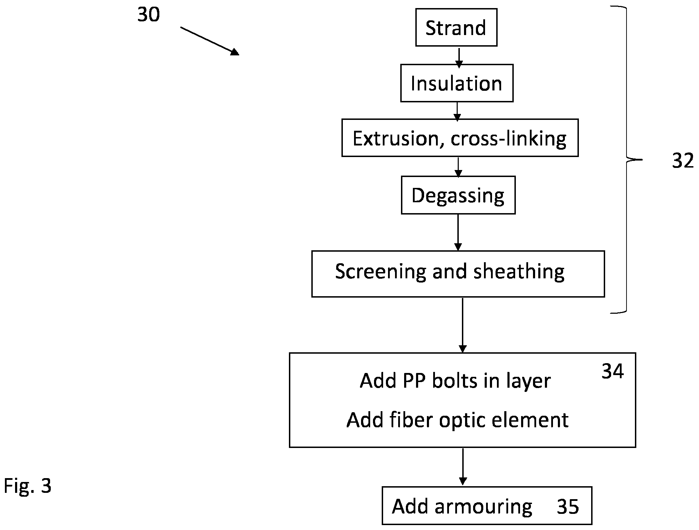

The composite electric power cable 20 of figure 2, can be manufactured by means of the method illustrated in Figure 3.

A number of inner layers 21 is assembled in step 32, for example by conductor stranding, providing insulation system, extrusion, cross linking and degassing, screening and sheathing. The number of layers and types of layers may vary according to the type of power cable and the intended use of the power cable, but for power cables at least one electric conductor is provided.

After the inner layers are finalized, a data transmission layer 24 with at least one fiber optic element 23 is added by executing step 34. The data transmission layer 24 is provided in step 34 by winding a plurality of polypropylene bolts 22 helically around the inner layers. The at least one fiber optic element 23 is similarly wound helically around the inner layers of the composite electric power cable 20 between at least two polypropylene bolts. The winding of polypropylene bolts 22 and the at least one fiber optic element 23 is performed in such a way that it has the effect that at least one polypropylene bolt 22 is replaced by the at least one fiber optic element 23.

The winding of the plurality of polypropylene bolts helically around the inner layers, and the winding of the at least one fiber optic element between at least two of the polypropylene bolts may be done simultaneously. This can be done by substituting one of the polypropylene bolts with the at least one fiber optic element during the winding, for example by substituting one of the bobbins feeding polypropylene bolt with a bobbin feeding fiber optic element. The winding of at least one fiber optic element between at least two of the polypropylene bolts, has the effect of at least one polypropylene bolt in a data transmission layer being replaced/substituted by a fiber optic element in the resulting layer.

As a final step 35, an armoring layer 26 may be added to further protect the composite electric power cable 20.

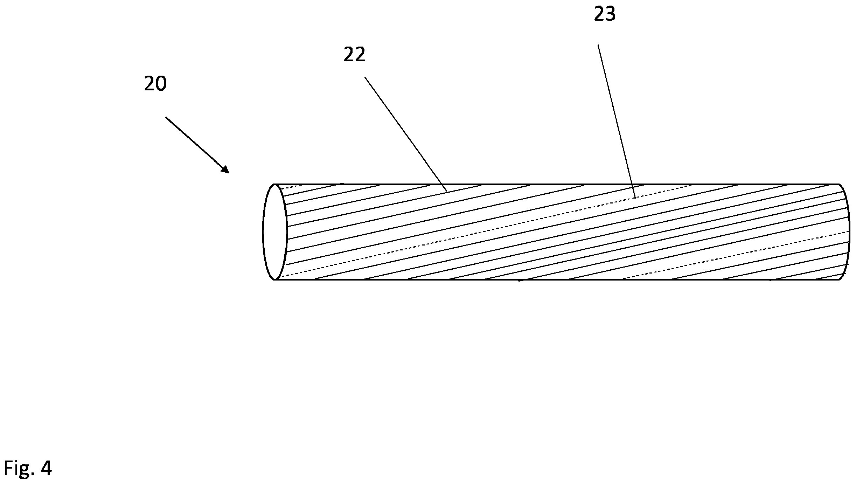

Figure 4 illustrates schematically a data transmission layer on a section of a composite electric power cable 20. A fiber optic element 23 is wound helically around the composite electric power cable 20 between similarly helically wound polypropylene bolts 22. The polypropylene bolts 22 and the fiber optic element 23 are arranged in contact with each other to form an enclosed layer around the inner layers of the composite electric power cable 20.

Even if the present invention provides a more robust incorporated fiber optic element in a composite electric power cable, breaks and failure may occur.

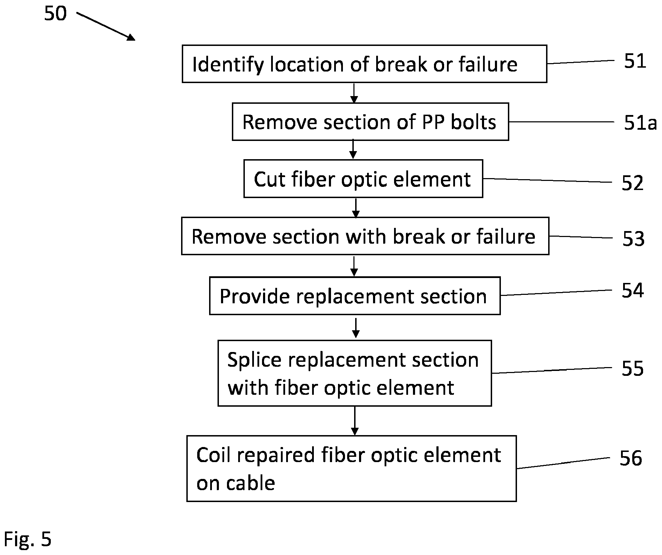

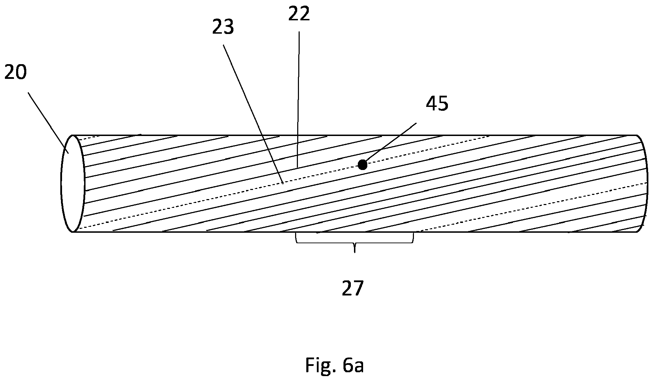

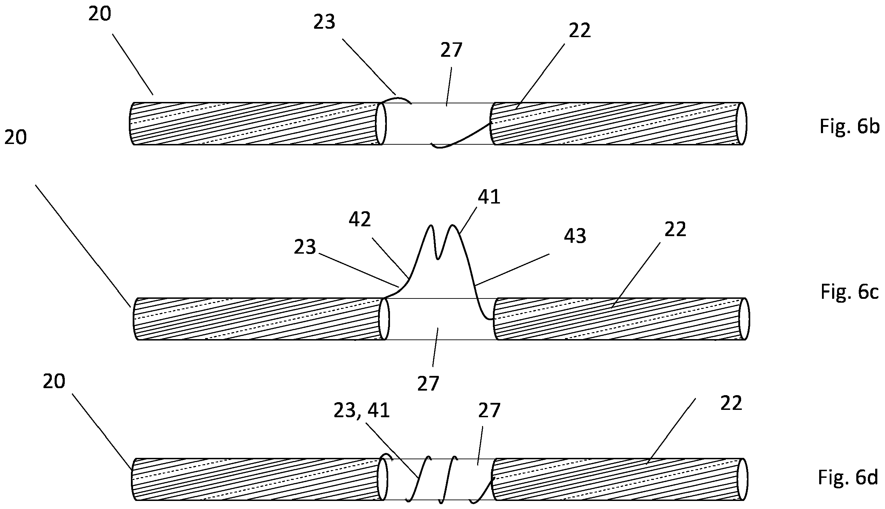

Figure 5 and figures 6a, 6b, 6c and 6d illustrate a method 50 for repairing a fiber optic element 23 in a composite electric power cable 20.

The first step 51 is to identify a location 45 of a break or failure in the fiber optic element 23 (see fig. 6a). When the location 45 of a break or failure is identified, sections of polypropylene bolts on both sides of the identified location is removed in step 51a to give room for replacement of the broken/failed part of the fiber optic element 23. This exposes the inner layers 21 of the composite electric power cable 20 in a repair region 27, as shown in figure 6b.

If any layers over the fiber optic element 23 must be removed to make access to the data transmission layer, this is performed after locating the break or failure.

In order to remove and replace the section of fiber optic element 23 comprising the break or failure, two cuts are made in a step 52 in the fiber optic element 23, a first cut 42 on a first side of the identified location 45 and a second cut 43 on a second side of the identified location 45. The section comprising the break or failure is then removed in step 53.

In the next step 54, a replacement section 41 of optical fiber is provided, that has a length that is at least equal to the removed section of fiber optic element 23.

In some cases, the replacement section 41 is longer than the removed section of fiber optic element 23, thus producing an overlength. Having an overlength may be advantageous, as it makes it easier to splice the replacement section with the cut ends of fiber optic element 23.

The splicing is performed in step 55 by splicing a first end of the replacement section 41 to the first cut 42 of the fiber optic element 23, forming a first spliced region and splicing a second end of the replacement section 41 to the second cut 43 of the fiber optic element 23, forming a second spliced region.

To protect the spliced regions, the replacement section 41 may be wrapped with nylon strips, heat shrink sleeves or tape.

If there is formed an overlength of the replacement section 41, this overlength can be wound around the inner layer 21 in the repair region 27 in step 56. The repair region 27 may then be wrapped with nylon strips, heat shrink sleeves or tape to fill in the repair region and build the diameter needed.

In figure 6c a replacement section 41 has been spliced onto the fiber optic element 23, providing an overlength. Some overlength of the fiber optic element may also occur due to the removal of the polypropylene bolts and to which degree the fiber optic element was wound during the original manufacturing of the composite electric power cable.

In figure 6d, the repaired fiber optic element 23 with replacement section 41 has been wound around the inner layers in the repair region 27. How the winding of the repaired fiber optic element 23 with replacement section is done will vary due to the extent of overlength.

## Claims

1. A method (30) for manufacturing a composite electric power cable (20), the method (30) comprising the steps of:
- assembling (32) inner layers (21) of the composite electric power cable (20), wherein the inner layers (21) comprises at least one electric conductor (29),
- adding (34) a data transmission layer (24) comprising a plurality of polypropylene bolts (22) and at least one fiber optic element (23), by winding the plurality of polypropylene bolts (22) helically around the inner layers (21) and winding the at least one fiber optic element (23) between at least two of the polypropylene bolts (22).

2. The method according to claim 1, wherein winding the plurality of polypropylene bolts (22) helically around the inner layers (21) and winding the at least one fiber optic element (23) between at least two of the polypropylene bolts (22) are done simultaneously.

3. The method (30) according to claim 1 or 2, comprising a step of:
- adding an armoring layer (26) over the data transmission layer (24).

4. The method (30) according to any of the claims 1 to 3, wherein the method comprises the step of:
- providing the at least one fiber optic element (23) within a tube (25), and wherein the step of adding (34) the data transmission layer (24) is performed by winding the tube (25) helically around the inner layers (21) between at least two of the polypropylene bolts (22).

5. The method (30) according to claim 4, wherein the step of providing the at least one fiber optic element (23) within a tube (25) comprises providing the fiber optic elements within a metallic tube.

6. The method (30) according to claim 4 or 5, wherein the tube (25) has an outer diameter of 40% to 120% of the outer diameter of the polypropylene bolts (22).

7. The method (30) according to claim 4 or 5, wherein the tube (25) has an outer diameter of ca. 50% to 100% of the outer diameter of the polypropylene bolts (22).

8. A method (50) for repairing a composite electric power cable (20) manufactured by the method (30) according to any one of the claims 1-7, the method comprising the steps of:
- identifying (51) a location (45) of a break or failure in the fiber optic element (23);
- removing sections of polypropylene bolts (22) on both sides of the identified location, thereby defining a repair region (27);
- making (52) a first cut (42) of the fiber optic element (23) on a first side of the identified location;
- making (52) a second cut (43) of the fiber optic element (23) on a second side of the identified location;
- removing (53) a section of the fiber optic element (23) between the first cut and the second cut;
- providing (54) a replacement section (41) of optical fiber having a length at least equal to the removed section of fiber optic element (23);
- splicing (55) a first end of the replacement section (41) to the first cut of the fiber optic element, forming a first spliced region;
- splicing (55) a second end of the replacement section (41) to the second cut of the fiber optic element, forming a second spliced region;
- winding the fiber optic element (23) with replacement section (41) around the inner layers (21).

9. The method (50) according to claim 7, comprising the step of adding an armoring layer (26) over the data transmission layer (24).

10. The method (50) according to claim 7, further performing the following steps:
- adding a protection device to the spliced region of fiber optic element, such as tape, heat shrink sleeve, nylon straps, etc.

11. The method (50) according to claim 7 or 8, wherein the length of the replacement length (41) of fiber optic element is larger than the length of the removed length of fiber optic element, and wherein the step of winding the fiber optic element (23) with replacement section (41) around the inner layers (21) is performed winding the optic element (23) with replacement section (41) over the inner layers (21) in the repair region (27).

12. A composite electric power cable (20), comprising
- inner layers (21) comprising at least one electric conductor (29),
- a data transmission layer (24) comprising a plurality of polypropylene bolts (22) and at least one fiber optic element (23), wherein the polypropylene bolts (22) are wound helically around the inner layers (21), and wherein the at least one fiber optic element (23) is wound helically around the inner layers (21) between at least two of the polypropylene bolts (22).

13. The composite electric power cable (20) according to claim 12, wherein the at least one fiber optic element (23) is arranged within a tube (25), and wherein the tube (25) is wound helically around the inner layers (21).

14. The composite electric power cable (20) according to claim 13, wherein the tube (25) is a metallic tube (25), such as stainless steel or other steel alloy.

15. The composite electric power cable (20) according to claim 13 or 14, wherein the tube (25) has an outer diameter of 40% to 120% of the outer diameter of the polypropylene bolts (22).

16. The composite electric power cable (20) according to claim 13 or 14, wherein the tube (25) has an outer diameter of ca. 50% to ca. 100% of the outer diameter of the polypropylene bolts (22).

17. The composite electric power cable (20) according to any one of the claims 12-16, wherein the composite electric power cable (20) comprises an armoring layer (26) arranged around the data transmission layer (24).
